# EUROPEAN PATENT SPECIFICATION

(11) **EP 3 573 211 B1**
(45) Date of publication and mention of the grant of the patent: **11.11.2020**
(21) Application number: 18201359.9
(22) Date of filing: 18.10.2018
(51) Int. Cl.: H02J 7/00, H02H 7/18

(54) **BATTERY DEVICE AND OPERATING METHOD THEREOF**
BATTERIEVORRICHTUNG UND BETRIEBSVERFAHREN DAFÜR
DISPOSITIF DE BATTERIE ET PROCÉDÉ DE FONCTIONNEMENT CORRESPONDANT

(30) Priority: 23.05.2018 TW 107117535
(43) Date of publication of application: 27.11.2019
(73) Proprietor: Quanta Computer Inc., Taoyuan City 333 (TW)
(72) Inventor: Yen, Wei-Ting, 333 Taoyuan City (TW)
(74) Representative: Michalski Hüttermann & Partner Patentanwälte mbB

(56) References cited:
- WO-A1-2015/019627
- DE-U1- 29 823 530
- US-A1- 2008 100 298
- US-A1- 2014 203 736

## Description

### BACKGROUND OF THE INVENTION

### Field of the Invention

The present disclosure relates to a battery device and, in particular, to a battery device on which the over-discharge current protection value can be adjusted.

### Description of the Related Art

A lithium-ion battery is a secondary (or rechargeable) battery. Many existing electronic devices are provided with electricity by lithium-ion batteries. These electronic devices include servers, electric vehicles, mobile phones, and so on. Lithium-ion batteries have many advantages, such as higher energy density, larger output power, no memory effects, and so on.

Manufacturers have established some protection mechanisms in existing battery devices that use lithium-ion batteries. For example, the battery manufacturer may set it so the discharge current of the battery device cannot exceed a predetermined C-rate (protection value) to protect the battery device from damage or danger.

However, the current protection value of existing battery devices is fixed, so the battery device discharges with a constant current, and the voltage of the battery device decreases with use, and this causes the output power of the battery device to decrease. As the output power of a battery device decreases, the performance of the electronic device powered by the electricity from the battery device may degrade.

Therefore, a battery device which discharges with a constant power is required to maintain the performance of the electronic device. For such battery device discharging with a constant power, corresponding protection value adjustment is required.

DE29823530 and US2014/203736 A1 disclose a rechargeable battery discharged at constant power.

US2008/100298 A1 and WO2015/019627 A1 disclose a rechargeable battery with an overcurrent protection device.

### BRIEF SUMMARY OF THE INVENTION

In accordance with one feature of the present invention, the present disclosure provides a battery device. The battery device includes at least one battery cell, configured to store electricity; and a management chip, coupled to the battery cell, the management chip controls the battery cell to discharge at a constant power, wherein a plurality of voltage ranges or battery capacity ranges and a plurality of over-discharge current protection values corresponding to the voltage ranges or battery capacity ranges set in the management chip, the management chip sets one of the over-discharge current protection values corresponding to one of the voltage ranges or battery capacity ranges as the present over-discharge current protection value of the battery device after the management chip detects and determines that the voltage or the battery capacity of the battery cell has fallen in one of the voltage ranges or battery capacity ranges.

In accordance with one feature of the present invention, the present disclosure provides a method of operating a battery device. The method includes using a management chip to control at least one battery cell to discharge at a constant power and detect the voltage or the battery capacity of the battery cell; and based on a plurality of voltage ranges or battery capacity ranges and a plurality of over-discharge current protection values corresponding to the voltage ranges or battery capacity ranges set in the management chip, the management chip sets one of the over-discharge current protection values corresponding to one of the voltage ranges or battery capacity ranges as the present over-discharge current protection value of the battery device after the management chip detects and determines that the voltage or the battery capacity of the battery cell has fallen in one of the voltage ranges or battery capacity ranges.

### BRIEF DESCRIPTION OF THE DRAWINGS

In order to describe the manner in which the above-recited and other advantages and features of the disclosure can be obtained, a more particular description of the principles briefly described above will be rendered by reference to specific examples thereof which are illustrated in the appended drawings. Understanding that these drawings depict only example aspects of the disclosure and are not therefore to be considered to be limiting of its scope, the principles herein are described and explained with additional specificity and detail through the use of the accompanying drawings in which:
Fig. 1 is a block diagram of a battery device in accordance with some embodiments of the present disclosure.
Fig. 2A, 2B, 2C and 2D show the discharge current curve of the battery device in accordance with some embodiments of the present disclosure.
Fig. 3 is a flowchart of a method of protection value adjustment of the battery device in accordance with some embodiments of the present disclosure.
Fig. 4 is a flowchart of a method of protection value adjustment of the battery device in accordance with some embodiments of the present disclosure.

### DETAILED DESCRIPTION OF THE INVENTION

The present inventions can be embodied in many different forms. Representative embodiments are shown in the drawings, and will herein be described in detail. The present disclosure is an example or illustration of the principles of the present disclosure, and is not intended to limit the broad aspects of the disclosure to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference, or otherwise. For purposes of the present detailed description, unless specifically disclaimed, the singular includes the plural and vice versa; and the word "including" means "including without limitation." Moreover, words of approximation, such as "about," "almost," "substantially," "approximately," and the like, can be used herein to mean "at, near, or nearly at," or "within 3-5% of," or "within acceptable manufacturing tolerances," or any logical combination thereof, for example.

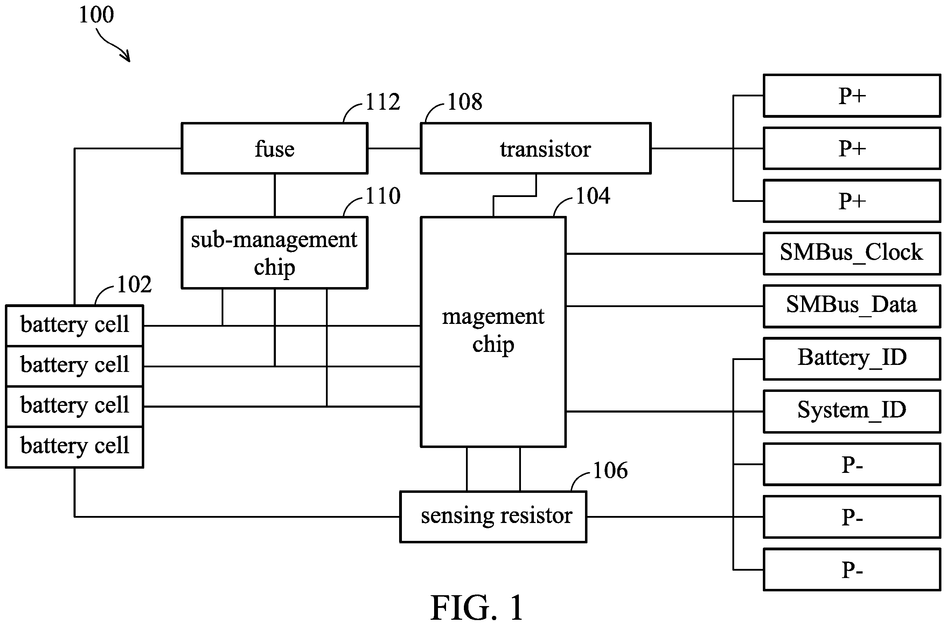

Fig. 1 is a block diagram of a battery device in accordance with some embodiments of the present disclosure. A battery device 100 includes one or more battery cells 102, a management chip 104, a sensing resistor 106, at least one transistor 108, a sub-management chip 110, and a fuse 112. It is understood that other configurations and inclusion or omission of various items in the battery device 100 may be possible. The battery device 100 is exemplary, and is not intended to limit the disclosure beyond what is explicitly recited in the claims.

The battery cell 102 can store electricity. In this embodiment, the battery cell 102 is lithium-ion battery. The lithium-ion battery is a rechargeable battery (secondary battery) that operates by the lithium ions moving between a positive electrode and a negative electrode. The positive electrode of the lithium-ion battery is generally composed of metal oxide having lithium ions. The negative electrode of the lithium-ion battery is generally lattices composed of graphite. The lithium ions move to the graphite lattices when the lithium-ion battery is charged. The lithium ions move to the metal oxide when the lithium-ion battery is discharged. The process of lithium ions entering the positive electrode (metal oxide) is called intercalation, and the process of lithium ions leaving the positive electrode is called deintercalation; the process of lithium ions entering the negative electrode (graphite lattices) is called insertion, and the process of lithium ions leaving the negative electrode is called extraction.

As shown in Fig. 1, the management chip 104 is connected to the battery cell 102 to detect the voltage or capacity of the battery cell 102. The transistor 102 is coupled to the battery cell 102 and the positive electrode P+ of the battery device 100. The management chip 104 is connected to the transistor 108 to control the on/off (turn on/turn off) of the transistor 108, thereby controlling the charge and discharge of the battery device 100. For example, when the battery device 100 is connected to an external power source (e.g., a DC power source or a DC power source converted from the AC power source) and the management chip 104 turns on the transistor 108, the battery cell 102 may be connected to the external power source so that the received power (electricity) may be stored in the battery cell 102. When the management chip 104 turns off the transistor 108, the battery cell 102 may be disconnected from the external power source to stop the battery device 100 from being charged. In the same way, when the battery device 100 is connected to an external electronic device (e.g., a mobile device) and the management chip 104 turns on the transistor 108, the battery cell 102 may be connected to the external electronic device so that the battery device 100 provides power to the external electronic device. When the management chip 104 turns off the transistor 108, the battery cell 102 may be disconnected from the external electronic device to stop the battery device 100 from providing power.

The management chip 104 is an integrated circuit device, which may include processor, microprocessor, controller, memory, other suitable integrated circuits, or combinations thereof. The management chip 104 may detect the voltage, capacity, temperature of the battery cell 102 (or the battery device 100), and control the battery device 100 according to the detected data. In the present embodiment, the management chip 104 may control the battery device 100 (or the battery cell 102) to discharge with a constant power, i.e., controlling the battery device 100 to output the constant power for an external electronic device (or a load). In some embodiments, the management chip 104 detects the battery cell 102 every minute. In other embodiments, the management chip 104 continues to detect the cell 102.

The sensing resistor 106 is coupled to the battery cell 102, the management chip 104, and the negative electrode P- of the battery device 100. The sensing resistor 106 may detect the discharge current of the battery device 100. In the present embodiment, when the battery device 100 is connected to an external electronic device (not shown), the management chip 104 may check whether the discharge current of the battery device 100 exceeds the presently setting protection value according to the discharge current detected by the sensing resistor 106. When the discharge current of the battery device 100 exceeds the presently setting protection value, the management chip 104 turns off the transistor 108 to stop the battery device 100 from providing power to avoid damage of the battery device 100 or causing danger.

In the present embodiment, the protection value is represented by C-rate, which is equivalent to current. In the present embodiments, there are various protection values such as an over-discharge current protection value, a peak discharge current protection value, and a outrush discharge current protection value. The explanation of C-rate and various protection values will be discussed below.

The fuse 112 is coupled to the battery cell 102 and the transistor 108. The sub-management chip 110 is coupled to the fuse 112, the management chip 104, and the battery cell 102.The sub-management chip 110 and the fuse 112 serve as the secondary protection of the battery device 100. For example, when the main management chip 104 detects that the transistor 108 has failed and cannot be turned off to stop the battery device 100 from providing power, the main management chip 104 instructs the sub-management chip 110 to cut off the fuse 112 so that the battery device 100 stops providing power.

The sub-management chip 110 is also an integrated circuit device that may include processor, microprocessor, controller, memory, other suitable integrated circuits, or combinations thereof.

In the present embodiment, the battery device 100 further includes a plurality of pins. As shown in Fig. 1, the battery device 100 further includes a clock pin SMBus_Clock, a data pin SMBus_Data, an identification pin Battery_ID, and an identification pin System_ID. The battery device 100 can communicate with the electronic device powered by the battery device 100 through the clock pin SMBus_Clock and the data pin SMBus_Data. The identification pin Battery_ID makes the electronic device powered by the battery device 100 recognize the battery device 100. The identification pin System_ID makes the battery device 100 recognize the electronic device powered by the battery device 100.

In the present embodiment, a plurality of voltage ranges or battery capacity ranges, and a plurality of protection values (over-discharge current protection values, peak discharge current protection values, and outrush discharge current protection values) corresponding to the voltage ranges or battery capacity ranges are set (or configured) in the management chip 104. After the management chip 104 detects that the present voltage or capacity of the battery device 100 (battery cell 102) falls in a corresponding voltage range or capacity range, the management chip 104 sets the protection value of the corresponding voltage range or capacity range as the present protection value of the battery device 100. The protection value and the processes that the management chip 104 sets the protection value of the present embodiment will be described below.

In addition to the ampere (A) or milliampere (mA) are generally used to represent the current unit of the battery device, C-rate (C) is also used as the current unit. C-rate is inversely proportional to time. For example, 1C means that the capacity of the battery device (or the battery cell) is fully discharged within 1 hour, and 2C means that the capacity of the battery device is fully discharged within 0.5 hours. In the present embodiment, a battery device having capacity of 3000 mAh means that if the battery device discharge with a discharge current 3A, it can discharge for 1 hour. If the discharge current of the battery device is 3A, it means that the battery device discharge at the C-rate of 1C. If the discharge current of the battery device is 6A, it means that the battery device discharge at the C-rate of 2C.

The following table shows various parameters of a conventional battery device.

| The capacity of the battery device : 3000 mAh | | | | | | | | |
|---|---|---|---|---|---|---|---|---|
| Remaining capacity (%) | 100∼81 | | 80-41 | | 40-21 | | 20-0 | |
| Voltage (V) | 4.4 | 4.2 | 4.2 | 3.8 | 3.8 | 3.4 | 3.4 | 3 |
| Current (A) | 6 | 6 | 6 | 6 | 6 | 6 | 6 | 6 |
| Power (W) | 26.4 | 25.2 | 25.2 | 22.8 | 22.8 | 20.4 | 20.4 | 18 |
| C-rate(C) | 2 | 2 | 2 | 2 | 2 | 2 | 2 | 2 |
| over-discharge current protection value (C) | 2.1 | | | | | | | |
| peak discharge current protection value (C) | 2.63 | | | | | | | |
| outrush discharge current protection value (C) | 3.47 | | | | | | | |

As shown in the above table, the battery device has capacity of 3000 mAh and discharges with a constant current of 6A (i.e., discharge using the C-rate of 2C). As the battery device discharges, the voltage of the battery device decreases. In the present embodiment, the operating voltage of the battery device is in a range of 4.4V to 3V. When the voltage of the battery device is less than 3V, the battery device may not discharge current so as to protect the lithium-ion battery (battery cell) therein. Therefore, when the voltage of the battery device is 4.4V, the capacity of the battery device is set to 100%, and when the voltage of the battery device is 3V, the capacity of the battery device is set to 0%.

As shown in the above table, the over-discharge current protection value of the battery device is 2.1C, which represents that when the discharge current of the battery device is greater than the over-discharge current protection value (2.1C) (i.e., the discharge current is abnormal) after the battery device discharge in stable, the battery device may stop providing power to avoid damage of the battery device or causing danger.

The peak discharge current protection value of the battery device is 2.63C, which represents that the battery device may stop providing power when the peak value of the discharge current of the battery device is greater than 2.63C (i.e., 7.89 A) and does not reach stable discharge within 10s while the battery device is progressing from starting discharge to stable discharge.

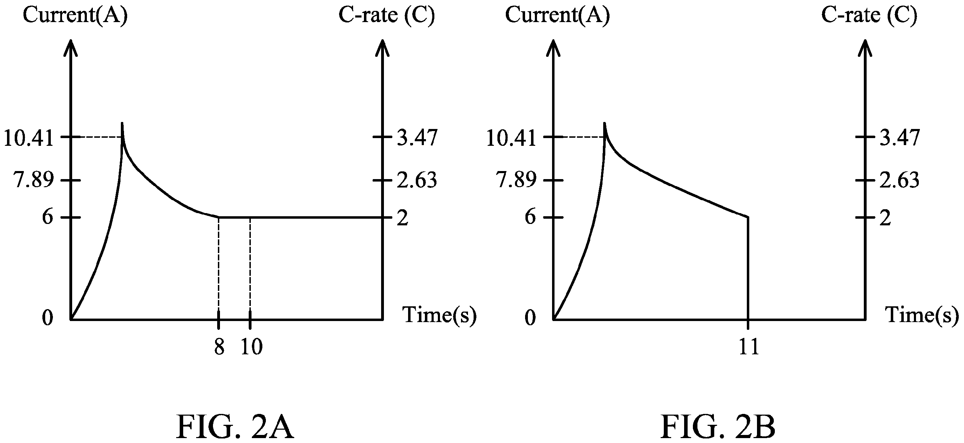

The outrush discharge current protection value of the battery device is 3.47C, which represents that the battery device may stop providing electricity when the discharge current of the battery device is greater than 3.47C (i.e., 10.41A) and continues for 30ms while the battery device is progressing from starting discharge to stable discharge. Figs. 2A to 2D are subsequently used as exemplary embodiments of the discharge current curve of the battery device illustrating the over-discharge current protection value, the peak discharge current protection value, and the outrush discharge current protection value.

Fig. 2A shows the discharge current curve of the battery device. The battery device starts to discharge at time 0s, and reaches stable discharge at time 8s. In Fig. 2A, during the time interval from starting discharge to stable discharge for the battery device, although the peak value of the discharge current of the battery device is greater than 2.63C, the battery device reaches stable discharge within 10s (stable discharge at 8s). Therefore, the battery device does not reach the peak discharge current protection value and stop providing power. In addition, although the discharge current of the battery device is greater than 3.47C while the battery device is progressing from starting discharge to stable discharge, the duration of the discharge does not exceed 30 ms. Therefore, the battery device also does not reach the condition of the outrush discharge current protection value and stop providing power.

Fig. 2B shows the discharge current curve of the battery device. The battery device starts to discharge at 0s, and reaches stable discharge at 11s. In Fig. 2B, while the battery device is progressing from starting discharge to stable discharge, although the discharge current of the battery device is greater than 3.47C, the duration does not exceed 30 ms. Therefore, the battery device does not reach the condition of the outrush discharge current protection value. However, the discharge current of the battery device is greater than 2.63C and the battery device reaches stable discharge over 10s (stable discharge at 11s) while the battery device is progressing from starting discharge to stable discharge. Therefore, the battery device reaches the condition of the peak discharge current protection value and stops providing power.

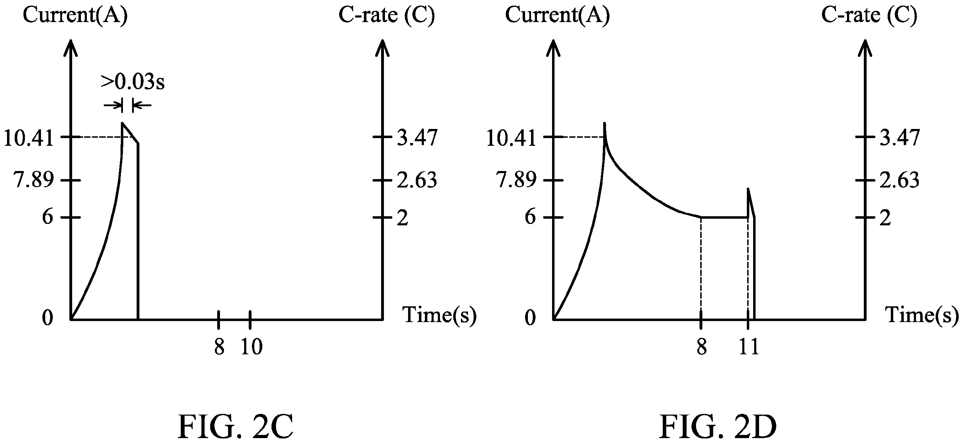

Fig. 2C shows the discharge current curve of the battery device. The battery device starts to discharge at 0s, and reaches stable discharge at 8s. In Fig. 2C, while the battery device is progressing from starting discharge to stable discharge, the discharge current of the battery device is greater than 3.47C, and the duration exceeds 30 ms. Therefore, the battery device reaches the condition of the outrush discharge current protection value and stops providing power.

Fig. 2D shows the discharge current curve of the battery device. The battery device starts to discharge at 0s, and reaches stable discharge at 8s. In Fig. 2D, while the battery device is progressing from starting discharge to stable discharge, although the discharge current of the battery device is greater than 2.63C, the battery device reaches stable discharge within 10s (stable discharge at time 8s). Therefore, the battery device does not reach the condition of the peak discharge current protection value. In addition, although the discharge current of the battery device is greater than 3.47C while the battery device is progressing from starting discharge to stable discharge, the duration of the discharge does not exceed 30 ms. The battery device also does not reach the condition of the outrush discharge current protection value. However, after the discharge current of the battery device reaches stable discharge at time 8s, the discharge current is greater than the over-discharge current protection value of 2.1 C at 11s, so that the battery device stops providing power.

As shown in the above table, the conventional battery device discharges with a constant current. However, the voltage of the battery device decreases as using, which causes the output power of the battery device to decrease. As the output power of the battery device decreases, the performance of the electronic device power by the battery device may degrade. Therefore, in the present embodiment, the management chip 104 controls the battery device 100 (or the battery cell 102) to discharge at a constant power to maintain the performance of the electronic device and the battery device 100 may adjust the protection value corresponding to the rising discharge current due to discharge at the constant power

The following table shows various parameters of the battery device 100 in the present embodiment.

| The capacity of the battery device : 3000 mAh | | | | | | | | |
|---|---|---|---|---|---|---|---|---|
| Remaining capacity (%) | 100∼81 | | 80-41 | | 40-21 | | 20-0 | |
| Voltage (V) | 4.4 | 4.2 | 4.2 | 3.8 | 3.8 | 3.4 | 3.4 | 3 |
| Current (A) | 6 | 6.29 | 6.29 | 6.95 | 6.95 | 7.76 | 7.76 | 8.8 |
| Power (W) | 26.4 | 26.4 | 26.4 | 26.4 | 26.4 | 26.4 | 26.4 | 26.4 |
| C-rate(C) | 2 | 2.1 | 2.1 | 2.32 | 2.32 | 2.59 | 2. 5 | 2.96 |
| over-discharge current protection value (C) | 2.1 | | 2.4 | | 2.6 | | 3 | |
| peak discharge current protection value (C) | 2.63 | | 3 | | 3.25 | | 3.75 | |
| outrush discharge current protection value (C) | 3.47 | | 3.96 | | 4.29 | | 4.95 | |

As shown in the above table, the battery device 100 has capacity of 3000 mAh and discharges using a constant power of 26.4W. As the battery device 100 discharges, the voltage of the battery device 100 decreases. As discussed above, in the present embodiment, the operating voltage of the battery device 100 is in the range of 4.4V to 3V. When the voltage of the battery device 100 is 4.4V, the capacity of the battery device 100 is set to 100%, and when the voltage of the battery device 100 is 3V, the capacity of the battery device 100 is set to 0%. It should be understood that the parameter values of the battery device 100 are exemplary only, and is not intended to limit the disclosure.

As discussed above, the discharge current of the battery device 100 may increase so that it is necessary to adjust the protection value of the battery device 100 to prevent the discharge current of the battery device 100 from exceeding the protection value during normal operation so that the battery device 100 stops providing power.

As shown in the above table, in the present embodiment, the voltage and the capacity of the battery device 100 are divided into four ranges, and are not intended to limit the disclosure. Each voltage range and capacity range corresponds to three protection values (i.e., over-discharge current protection value, peak discharge current protection value, and outrush discharge current protection value). For example, when the voltage of the battery device 100 is from 4.2V to 3.8V and the capacity of the battery device 100 is 80% to 41%, the corresponding over-discharge current protection value is 2.4C, the corresponding peak discharge current protection value is 3C, and the corresponding outrush discharge current protection value is 3.96C. In the present embodiment, the voltage ranges, the capacity ranges, and the corresponding protection values are stored in a memory (not shown) of the management chip 104, as discussed above. In other embodiments, the voltage ranges, the power ranges, and the corresponding protection values are stored or set in the memory outside the management chip 104.

As discussed above, after the management chip 104 detects that the present voltage or capacity of the battery device 100 (battery cell 102) falls in the corresponding voltage range or capacity range, the management chip 104 sets the protection value corresponding voltage range or capacity range as the present protection value of the battery device 100. For example, when the management chip 104 detects that the present voltage of the battery device 100 is 4V (between 4.2V and 3.8V), the management wafer 104 sets the present over-discharge current protection value to 2.4C, the present peak discharge current protection value to 3C, and the present outrush discharge current protection value to 3.96C. Therefore, when the battery device 100 discharges in a voltage range of 4.2V to 3.8V, the rising discharge current does not exceed the over-discharge current protection value of 2.4C (i.e., 7.2A), so that the battery device 100 does not stop providing power.

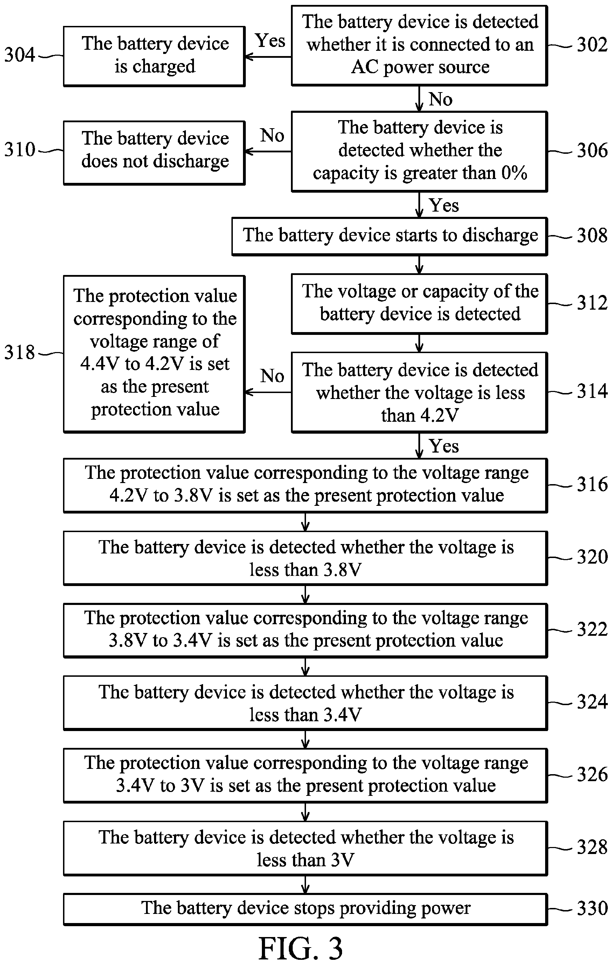

Fig. 3 is a flowchart of a method of protection value adjustment of the battery device, in accordance with some embodiments of the present disclosure. In the present embodiment, various parameters of the battery device 100 are as shown in the above table. In operation 302, the battery device 100 is detected whether it is connected to an AC power source. If the battery device 100 is connected to an AC power source, in operation 304, the battery device 100 is charged. If the battery device 100 is not connected to an AC power source, in operation 306, the battery device 100 is detected whether the capacity is greater than 0% (or the voltage is greater than 3V). If the capacity of the battery device 100 is greater than 0%, in operation 308, the battery device 100 starts to discharge. If the capacity of the battery device 100 is not greater than 0%, in operation 310, the battery device 100 may not discharge.

After the battery device 100 starts to discharge, in operation 312, the voltage or capacity of the battery device 100 is detected. In some embodiments, the voltage (or the capacity) of the battery device 100 is detected every minute after the detection is started. In other embodiments, the voltage (or the capacity) of the battery device 100 is continuously detected after the detection is started.

In operation 314, the battery device 100 is detected whether the voltage is less than 4.2V (or whether the capacity is less than 81%). If the voltage of the battery device 100 is less than 4.2V, in operation 316, the protection value corresponding to the voltage range 4.2V to 3.8V is set as the present protection value. For example, if the voltage of the battery device 100 is less than 4.2V, the management chip 104 sets the present over-discharge current protection value to 2.4C, the present peak discharge current protection value to 3C, and the present outrush discharge current protection value to 3.96C.

If the voltage of the battery device 100 is not less than 4.2V, in operation 318, the protection value corresponding to the voltage range of 4.4V to 4.2V is set as the present protection value. For example, if the voltage of the battery device 100 is not less than 4.2V, the management wafer 104 sets the present over-discharge current protection value to 2.1C, the present peak discharge current protection value to 2.63C, and the present outrush discharge current protection value to 3.47C.

In operation 320, the battery device 100 is detected whether the voltage is less than 3.8V (or whether the capacity is less than 41%). If the voltage of the battery device 100 is less than 3.8V, in operation 322, the protection value corresponding to the voltage range 3.8V to 3.4V is set as the present protection value. For example, if the voltage of the battery device 100 is less than 3.8V, the management chip 104 sets the present over-discharge current protection value to 2.6C, the present peak discharge current protection value to 3.25C, and the present outrush discharge current protection value to 4.29C.

In operation 324, the battery device 100 is detected whether the voltage is less than 3.4V (or whether the capacity is less than 21%). If the voltage of the battery device 100 is less than 3.4V, in operation 326, the protection value corresponding to the voltage range 3.4V to 3V is set as the present protection value. For example, if the voltage of the battery device 100 is less than 3.4V, the management chip 104 sets the present over-discharge current protection value to 3C, the present peak discharge current protection value to 3.75C, and the present outrush discharge current protection value to 4.95C.

In operation 328, the battery device 100 is detected whether the voltage is less than 3V (or whether the capacity reaches 0%). If the voltage of the battery device 100 is less than 3V, in operation 330, the battery device 100 stops providing power.

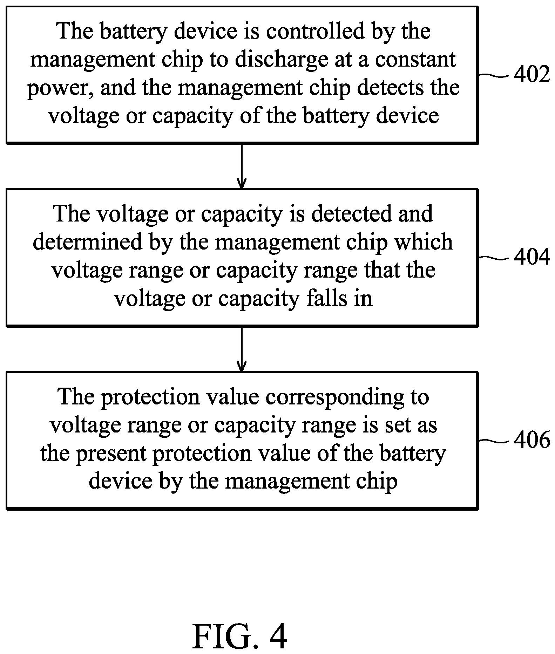

Fig. 4 is a flowchart of another method of protection value adjustment of the battery device, in accordance with some embodiments of the present disclosure. In operation 402, the battery device (or the battery cell(s) in the battery device) is controlled by the management chip to discharge at a constant power, and the management chip detects the voltage or capacity of the battery device. For example, the battery device 100 (or the battery cell 102) is controlled to discharge at a constant power by the management chip 104, and the management chip 104 voltage detects the voltage or capacity of the battery device 100.

In operation 404, the voltage or capacity is detected and determined by the management chip which voltage range or capacity range that the voltage or capacity falls in. The voltage ranges or the capacity ranges are pre-stored or set in the memory of the management chip, and the memory is also stored or set the protection values corresponding to the voltage ranges or the capacity ranges (over-discharge current protection value, peak discharge current protection value, and outrush discharge current protection value). For example, when the management chip 104 detects that the present voltage of the battery device 100 is 4V, it is detected and determined to fall in the voltage range of 4.2V to 3.8V.

In operation 406, after detecting and determining which voltage range or capacity range that the voltage or capacity falls in, the protection value corresponding to voltage range or capacity range is set as the present protection value of the battery device by the management chip. For example, when the management chip 104 detects and determines that the present voltage of the battery device 100 is 4V, after detecting and determining that the present voltage (4V) falls in the voltage range of 4.2V to 3.8V, the management chip 104 sets the present over-discharge current protection value to 2.4C, the present peak discharge current protection value is set to 3C and the present outrush discharge current protection value is set to 3.96C.

The terminology used herein is for the purpose of describing particular embodiments only, and is not intended to be limiting of the invention. As used herein, the singular forms "a", "an" and "the" are intended to include the plural forms as well, unless the context clearly indicates otherwise. Furthermore, to the extent that the terms "including," "includes," "having," "has," "with," or variants thereof, are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art. Furthermore terms, such as those defined in commonly used dictionaries, should be interpreted as having a meaning that is consistent with their meaning in the context of the relevant art, and will not be interpreted in an idealized or overly formal sense unless expressly so defined herein.

While various embodiments of the present invention have been described above, it should be understood that they have been presented by way of example only, and not limitation. Numerous changes to the disclosed embodiments can be made in accordance with the disclosure herein, without departing from the scope of the invention. Thus, the breadth and scope of the present invention should not be limited by any of the above described embodiments. Rather, the scope of the invention should be defined in accordance with the following claims.

Although the invention has been illustrated and described with respect to one or more implementations, equivalent alterations and modifications will occur or be known to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A battery device, comprising:
at least one battery cell, configured to store electricity; and
a management chip, coupled to the battery cell, configured to control the battery cell to discharge with a constant power, **characterized in that**
based on a plurality of voltage ranges or battery capacity ranges and a plurality of over-discharge current protection values corresponding to the voltage ranges or battery capacity ranges stored in the management chip, the management chip is configured to set one of the over-discharge current protection values corresponding to one of the voltage ranges or battery capacity ranges as a present over-discharge current protection value of the battery device after the management chip detects and determines that the voltage or the battery capacity of the battery cell has fallen in one of the voltage ranges or battery capacity ranges.

2. The battery device of claim 1, wherein a plurality of peak discharge current protection values corresponding to the voltage ranges or battery capacity ranges are set in the management chip, the management chip is configured to set one of the peak discharge current protection values corresponding to one of the voltage ranges or battery capacity ranges as a present peak discharge current protection value of the battery device after the management chip detects and determines that the voltage or the battery capacity of the battery cell has fallen in one of the voltage ranges or battery capacity ranges.

3. The battery device of claim 2, wherein a plurality of outrush discharge current protection values corresponding to the voltage ranges or battery capacity ranges are set in the management chip, the management chip is configured to set one of the outrush discharge current protection values corresponding to one of the voltage ranges or battery capacity ranges as a present outrush discharge current protection value of the battery device after the management chip detects and determines that the voltage or the battery capacity of the battery cell has fallen in one of the voltage ranges or battery capacity ranges.

4. The battery device of claim 3, further comprising:
at least one transistor, coupled to the battery cell and the management chip, the battery cell outputting the electricity in response to turning on the transistor; and
a sensing resistor, coupled to the battery cell and the management chip, to detect the discharge current of the battery device, wherein the management chip is configured to turn
off the transistor when the discharge current of the battery device exceeds the present over-discharge current protection value, peak discharge current protection value, or outrush discharge current protection value, so that the battery device stops providing electricity.

5. The battery device of claim 4, further comprising:
a fuse, coupled to the battery cell and the transistor; and
a sub-management chip, coupled to the battery cell and the fuse, wherein the sub-management chip is configured to cut off the fuse to make the battery device stop providing electricity when the transistor fails to turn off to provide electricity.

6. A method of operating a battery device, comprising:
controlling at least one battery cell to discharge with a constant power and detecting a voltage or a battery capacity of the battery cell using a management chip; and
based on a plurality of voltage ranges or battery capacity ranges and a plurality of over-discharge current protection values corresponding to the voltage ranges or battery capacity ranges stored in the management chip, the management chip sets one of the over-discharge current protection values corresponding to one of the voltage ranges or battery capacity ranges as a present over-discharge current protection value of the battery device after the management chip detects and determines that the voltage or the battery capacity of the battery cell has fallen in one of the voltage ranges or battery capacity ranges.

7. The method of claim 6, further comprising:
based on a plurality of peak discharge current protection values corresponding to the voltage ranges or battery capacity ranges that are set in the management chip, the management chip sets one of the peak discharge current protection values corresponding to one of the voltage ranges or battery capacity ranges as a present peak discharge current protection value of the battery device after the management chip detects and determines that the voltage or the battery capacity of the battery cell has fallen in one of the voltage ranges or battery capacity ranges.

8. The method of claim 7, further comprising:
based on a plurality of outrush discharge current protection values corresponding to the voltage ranges or battery capacity ranges that are set in the management chip, the management chip sets one of the outrush discharge current protection values corresponding to one of the voltage ranges or battery capacity ranges as a present outrush discharge current protection value of the battery device after the management chip detects and determines that the voltage or the battery capacity of the battery cell has fallen in one of the voltage ranges or battery capacity ranges.

9. The method of claim 8, further comprising:
detecting the discharge current of the battery device using a sensing resistor, wherein the management chip turns off a transistor to make the battery device stop providing electricity when the discharge current of the battery device exceeds the present over-discharge current protection value, peak discharge current protection value, or outrush discharge current protection value.

10. The method of claim 9, further comprising:
cutting off a fuse by a sub-management chip to stop the supply of electricity by the battery device when the transistor fails to turn off to make the battery device stop providing electricity.

## Patentansprüche

1. Batterievorrichtung mit:
mindestens einer Batteriezelle, die dafür konfiguriert ist, elektrische Energie zu speichern; und
einem Managementchip, der mit der Batteriezelle verbunden und dafür konfiguriert ist, die Batteriezelle so zu steuern, dass sie sich mit einer konstanten Leistung entlädt,
**dadurch gekennzeichnet, dass**
basierend auf mehreren Spannungsbereichen oder Batteriekapazitätsbereichen und mehreren den Spannungsbereichen oder Batteriekapazitätsbereichen entsprechenden Überentladestromschutzwerten, die im Managementchip gespeichert sind, der Managementchip dafür konfiguriert ist, einen der Überentladestromschutzwerte, der einem der Spannungsbereiche oder Batteriekapazitätsbereiche entspricht, als einen aktuellen Überentladestromschutzwert der Batterievorrichtung zu setzen, nachdem der Managementchip erfasst und bestimmt hat, dass die Spannung oder die Batteriekapazität der Batteriezelle in einen der Spannungsbereiche oder Batteriekapazitätsbereiche gefallen ist.

2. Batterievorrichtung nach Anspruch 1, wobei im Managementchip mehrere Spitzenentladestromschutzwerte gesetzt sind, die den Spannungsbereichen oder Batteriekapazitätsbereichen entsprechen, wobei der Managementchip dafür konfiguriert ist, einen der Spitzenentladestromschutzwerte, der einem der Spannungsbereiche oder Batteriekapazitätsbereiche entspricht, als einen aktuellen Spitzenentladestromschutzwert der Batterievorrichtung zu setzen, nachdem der Managementchip erfasst und bestimmt hat, dass die Spannung oder die Batteriekapazität der Batteriezelle in einen der Spannungsbereiche oder Batteriekapazitätsbereiche gefallen ist.

3. Batterievorrichtung nach Anspruch 2, wobei mehrere den Spannungsbereichen oder den Batteriekapazitätsbereichen entsprechende Überlaufentladestromschutzwerte im Managementchip gesetzt sind, wobei der Managementchip dafür konfiguriert ist, einen der Überlaufentladestromschutzwerte, der einem der Spannungsbereiche oder Batteriekapazitätsbereiche entspricht, als einen aktuellen Überlaufentladestromschutzwert der Batterievorrichtung zu setzen, nachdem der Managementchip erfasst und bestimmt hat, dass die Spannung oder die Batteriekapazität der Batteriezelle in einen der Spannungsbereiche oder Batteriekapazitätsbereiche gefallen ist.

4. Batterievorrichtung nach Anspruch 3, ferner mit:
mindestens einem Transistor, der mit der Batteriezelle und dem Managementchip verbunden ist, wobei die Batteriezelle den Strom in Antwort auf das Einschalten des Transistors ausgibt; und
einem mit der Batteriezelle und dem Managementchip verbundenen Erfassungswiderstand zum Erfassen des Entladestroms der Batterievorrichtung, wobei der Managementchip dafür konfiguriert ist, den Transistor auszuschalten, wenn der Entladestrom der Batterievorrichtung den aktuellen Überentladestromschutzwert, den Spitzenentladestromschutzwert oder den Überlaufentladestromschutzwert überschreitet, so dass die Batterievorrichtung die Stromabgabe stoppt.

5. Batterievorrichtung nach Anspruch 4, ferner mit:
einer Sicherung, die mit der Batteriezelle und dem Transistor verbunden ist; und
einem Sub-Managementchip, der mit der Batteriezelle und der Sicherung verbunden ist, wobei der Sub-Managementchip dafür konfiguriert ist, die Sicherung abzuschalten, um zu veranlassen, dass die Batterievorrichtung die Stromabgabe stoppt, wenn der Transistor die Stromabgabe nicht abschaltet.

6. Verfahren zum Betreiben einer Batterievorrichtung, mit den Schritten:
Steuern mindestens einer Batteriezelle für eine Entladung mit einer konstanten Leistung und Erfassen einer Spannung oder einer Batteriekapazität der Batteriezelle unter Verwendung eines Managementchips; und
Setzen eines der Überentladestromschutzwerte, der einem der Spannungsbereiche oder der Batteriekapazitätsbereiche entspricht, durch den Managementchip als einen aktuellen Überentladestromschutzwert der Batterievorrichtung basierend auf mehreren Spannungsbereichen oder Batteriekapazitätsbereichen und mehreren den Spannungsbereichen oder Batteriekapazitätsbereichen entsprechenden Überentladestromschutzwerten, die im Managementchip gespeichert sind, nachdem der Managementchip erfasst und bestimmt hat, dass die Spannung oder die Batteriekapazität der Batteriezelle in einen der Spannungsbereiche oder Batteriekapazitätsbereiche gefallen ist.

7. Verfahren nach Anspruch 6, ferner mit dem Schritt:
Setzen eines der Spitzenentladestromschutzwerte, der einem der Spannungsbereiche oder Batteriekapazitätsbereiche entspricht, durch den Managementchip als einen aktuellen Spitzenentladestromschutzwert der Batterievorrichtung basierend auf mehreren den Spannungsbereichen oder Batteriekapazitätsbereichen entsprechenden Spitzenentladestromschutzwerten, die im Managementchip gesetzt sind, nachdem der Managementchip erfasst und bestimmt hat, dass die Spannung oder die Batteriekapazität der Batteriezelle in einen der Spannungsbereiche oder Batteriekapazitätsbereiche gefallen ist.

8. Verfahren nach Anspruch 7, ferner mit:
Setzen eines der Überlaufentladestromschutzwerte, der einem der Spannungsbereiche oder Batteriekapazitätsbereiche entspricht, durch den Managementchip als einen aktuellen Überlaufentladestromschutzwert der Batterievorrichtung basierend auf mehreren den Spannungsbereichen oder Batteriekapazitätsbereichen entsprechenden Überlaufentladestromschutzwerten, die im Managementchip gesetzt sind, nachdem der Managementchip erfasst und bestimmt hat, dass die Spannung oder die Batteriekapazität der Batteriezelle in einen der Spannungsbereiche oder Batteriekapazitätsbereiche gefallen ist.

9. Verfahren nach Anspruch 8, ferner mit dem Schritt:
Erfassen des Entladestroms der Batterievorrichtung unter Verwendung eines Erfassungswiderstands, wobei der Managementchip einen Transistor ausschaltet, um zu veranlassen, dass die Batterievorrichtung die Stromabgabe stoppt, wenn der Entladestrom der Batterievorrichtung den aktuellen Überentladestromschutzwert, Spitzenentladestromschutzwert oder Überlaufentladestromschutzwert überschreitet.

10. Verfahren nach Anspruch 9, ferner mit dem Abschalten einer Sicherung durch einen Sub-Managementchip zum Stoppen der Stromabgabe durch die Batterievorrichtung, wenn sich der Transistor nicht ausschalten lässt, um zu veranlassen, dass die Batterievorrichtung die Stromabgabe stoppt.

## Revendications

1. Dispositif de batterie comprenant :
au moins une cellule de batterie conçue pour stocker de l'électricité ; et
une puce de gestion, couplée à la cellule de batterie, conçue pour commander la cellule de batterie pour qu'elle se décharge avec une puissance constante,
**caractérisé en ce que**,
sur la base d'une pluralité de plages de tensions ou de plages de capacités de batterie et d'une pluralité de valeurs de protection de courant de décharge excessive correspondant aux plages de tensions ou aux plages de capacités de batterie stockées dans la puce de gestion, la puce de gestion est conçue pour régler une des valeurs de protection de courant de décharge excessive correspondant à une des plages de tensions ou des plages de capacités de batterie sous la forme d'une valeur de protection de courant de décharge excessive actuelle du dispositif de batterie après que la puce de gestion détecte et détermine que la tension ou la capacité de la batterie de la cellule de batterie est tombée dans une des plages de tensions ou des plages de capacités de batterie.

2. Dispositif de batterie selon la revendication 1, dans lequel une pluralité de valeurs de protection de courant de décharge de pic correspondant aux plages de tensions ou aux plages de capacités de batterie sont fixées dans la puce de gestion, la puce de gestion est conçue pour régler une des valeurs de protection de courant de décharge de pic correspondant à l'une des plages de tensions ou des plages de capacités de batterie sous forme d'une valeur de protection de courant de décharge de pic actuelle du dispositif de batterie après que la puce de gestion détecte et détermine que la tension ou la capacité de la batterie de la cellule de batterie est tombée dans une des plages de tensions ou des plages de capacités de batterie.

3. Dispositif de batterie selon la revendication 2, dans lequel une pluralité de valeurs de protection de courant de décharge de débordement correspondant à des plages de tensions ou des plages de capacités de batterie sont réglées dans la puce de gestion, la puce de gestion est conçue pour régler une des valeurs de protection de courant de décharge de débordement correspondant à une des plages de tensions ou plages de capacités de batterie sous forme d'une valeur de protection de courant de décharge de débordement actuelle du dispositif de batterie après que la puce de gestion détecte et détermine que la tension ou la capacité de la batterie de la cellule de batterie est tombée dans une des plages de tensions ou des plages de capacités de batterie.

4. Dispositif de batterie selon la revendication 3, comprenant en outre :
au moins un transistor, couplé à la cellule de batterie et à la puce de gestion, la cellule de batterie émettant de l'électricité en réponse à la mise en marche du transistor ; et
une résistance de détection, couplée à la cellule de batterie et à la puce de gestion, pour détecter le courant de décharge du dispositif de batterie, où la puce de gestion est conçue pour arrêter le transistor lorsque le courant de décharge du dispositif de batterie excède la valeur de protection de courant de décharge excessive actuelle, la valeur de protection de courant de décharge de pic, ou la valeur de protection de courant de décharge de débordement, de sorte que le dispositif de batterie arrête de fournir de l'électricité.

5. Dispositif de batterie selon la revendication 4, comprenant en outre :
un fusible couplé à la cellule de batterie et au transistor ; et
une puce de gestion secondaire couplée à la cellule de batterie et au fusible, où la puce de gestion secondaire est conçue pour couper le fusible pour faire arrêter le dispositif de batterie de fournir de l'électricité lorsque le transistor ne s'éteint pas pour fournir de l'électricité.

6. Procédé de mise en fonction d'un dispositif de batterie comprenant :
la commande d'au moins une cellule de batterie pour qu'elle se décharge avec une puissance constante et
la détection d'une tension ou d'une capacité de batterie de la cellule de batterie en utilisant une puce de gestion ; et,
sur la base d'une pluralité de plages de tensions ou de plages de capacités de batterie et d'une pluralité de valeurs de protection de courant de décharge excessive correspondant aux plages de tensions et aux plages de capacités de batterie stockées dans la puce de gestion,
la puce de gestion règle une des valeurs de protection de courant de décharge excessive correspondant à l'une des plages de tensions ou plages de capacités de batterie sous forme d'une valeur de protection de courant de décharge excessive actuelle du dispositif de batterie après que la puce de gestion détecte et détermine que la tension ou la capacité de la batterie de la cellule de batterie est tombée dans une des plages de tensions ou des plages de capacités de batterie.

7. Procédé selon la revendication 6, comprenant en outre :
sur la base d'une pluralité de valeurs de protection de courant de décharge de pic correspondant aux plages de tensions ou plages de capacités de batterie qui sont réglées dans la puce de gestion, la puce de gestion règle une des valeurs de protection de courant de décharge de pic correspondant à l'une des plages de tensions ou plages de capacités de batterie sous forme d'une valeur de protection de courant de décharge de pic actuelle du dispositif de batterie après que la puce de gestion détecte et détermine que la tension ou la capacité de la batterie de la cellule de batterie est tombée dans une des plages de tensions ou des plages de capacités de batterie.

8. Procédé selon la revendication 7, comprenant en outre :
sur la base d'une pluralité de valeurs de protection de courant de décharge de débordement correspondant aux plages de tensions ou plages de capacités de batterie qui sont réglées dans la puce de gestion, la puce de gestion règle une des valeurs de protection de courant de décharge de débordement correspondant à l'une des plages de tensions ou plages de capacités de batterie sous forme d'une valeur de protection de courant de décharge de débordement actuelle du dispositif de batterie après que la puce de gestion détecte et détermine que la tension ou la capacité de la batterie de la cellule de batterie est tombée dans une des plages de tensions ou des plages de capacités de batterie.

9. Procédé selon la revendication 8, comprenant en outre :
la détection du courant de décharge du dispositif de batterie en utilisant une résistance de détection, où la puce de gestion coupe un transistor pour faire arrêter le dispositif de batterie de fournir de l'électricité lorsque le courant de décharge du dispositif de batterie excède la valeur de protection de courant de décharge excessive actuelle, la valeur de protection de courant de décharge de pic, ou la valeur de protection de courant décharge de débordement.

10. Procédé selon la revendication 9, comprenant en outre :
la coupure d'un fusible par une puce de gestion secondaire pour arrêter l'alimentation d'électricité par le dispositif de batterie lorsque le transistor ne s'est pas coupé pour faire arrêter le dispositif de batterie de fournir de l'électricité.
